(19) Europäisches Patentamt

European Patent Office

Office européen des brevets

(11) **EP 3 621 928 B1**

(12) **FASCICULE DE BREVET EUROPEEN**

(45) Date de publication et mention
de la délivrance du brevet:
**24.04.2024 Bulletin 2024/17**

(21) Numéro de dépôt: **18727056.6**

(22) Date de dépôt: **14.05.2018**

(51) Classification Internationale des Brevets (IPC):
***C03B 18/02*** *(2006.01)* ***C03B 18/10*** *(2006.01)*
***C03B 18/14*** *(2006.01)*

(52) Classification Coopérative des Brevets (CPC):
**C03B 18/10; C03B 18/02; C03B 18/14**

(86) Numéro de dépôt international:
**PCT/IB2018/053352**

(87) Numéro de publication internationale:
**WO 2018/207162 (15.11.2018 Gazette 2018/46)**

(54) **PROCEDE ET INSTALLATION AMELIORES DE FABRICATION DE VERRE PLAT PAR FLOTTAGE**

VERBESSERTES VERFAHREN UND ANLAGE ZUR HERSTELLUNG VON FLACHGLAS DURCH EINEN FLOTATIONSGLASPROZESS

IMPROVED METHOD AND INSTALLATION FOR THE PRODUCTION OF FLAT GLASS BY A FLOAT GLASS PROCESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2017 FR 1754223**

(43) Date de publication de la demande:
**18.03.2020 Bulletin 2020/12**

(73) Titulaire: **SAINT-GOBAIN GLASS FRANCE
92400 Courbevoie (FR)**

(72) Inventeurs:
• **LEBOIS, Félix
8049 Zürich (CH)**
• **BOUILLET, Fabien
60200 Compiegne (FR)**

(74) Mandataire: **Saint-Gobain Recherche
B.P. 135
39, quai Lucien Lefranc
93303 Aubervilliers Cedex (FR)**

(56) Documents cités:
**EP-A2- 0 251 325 EP-A2- 0 304 844
FR-A1- 2 372 122 US-A1- 2010 206 009**

EP 3 621 928 B1

**Description**

La présente invention concerne un procédé de fabrication de verre plat par flottage d'un ruban de verre sur un bain de métal fondu.

La fabrication de verre plat par flottage d'un ruban de verre sur un bain de métal fondu - généralement de l'étain - est connue de longue date. Ce procédé a permis d'améliorer significativement la planéité du verre obtenu. Il laisse néanmoins subsister des défauts de planéité à plus petite échelle, à savoir des défauts de longueur d'onde entre 1 mm et 100 mm - généralement de plus de 1cm, voire de plus de 5cm - en particulier sous forme de défauts d'ondulation ou de défauts dioptriques de la plaque de verre. Les défauts d'ondulation de la plaque de verre sont caractérisés par des profils des défauts de planéité des deux faces de la plaque de verre parallèles et n'entraînent donc pas de variations d'épaisseur à l'échelle de la longueur d'onde de ces défauts contrairement aux défauts dioptriques de la plaque de verre dont les profils de défaut de planéité sont symétriques par rapport au plan médian de la plaque de verre et entraînent des variations d'épaisseur à l'échelle de la longueur d'onde des défauts.

Ces défauts de planéité rendent difficiles à satisfaire les exigences contemporaines de plus en plus élevées concernant la qualité optique de la plaque de verre dans le cas des défauts dioptriques, mais également des produits finaux comme les verres feuilletés automobiles pénalisés par les deux types de défaut et tout particulièrement par les défauts d'ondulation des deux plaques de verre composant le produit final. Ainsi, concernant les vitrages automobiles, la tendance consiste à limiter la vitesse d'entraînement du ruban de verre sur le bain de métal fondu afin de procurer la qualité optique souhaitée. Dans d'autres domaines tels que les écrans d'affichage à cristaux liquides ou encore les écrans d'affichage des téléphones intelligents (communément dénommés *smartphone*), il est même préféré recourir à d'autres procédés de fabrication du verre afin d'atteindre un niveau de qualité optique encore plus élevé malgré une productivité moindre de ces procédés.

Une façon de quantifier la qualité optique d'un échantillon de verre plat eu égard à ses défauts de planéité sous forme d'ondulations est de se référer à son score de planéité lequel est égal à l'écart-type de la puissance optique en réflexion pour l'échantillon considéré. Plus le score de planéité est élevé, moindre est la qualité optique du verre.

Pour les verres sodocalciques fabriqués par le procédé de fabrication par flottage traditionnel de l'art antérieur, il a été établi une corrélation statistique entre le score de planéité - qui reflète donc les défauts d'ondulation - et les paramètres de flottage du verre, à savoir la vitesse d'entraînement de la feuille de verre à la sortie du bain et l'épaisseur du verre à la sortie du bain. Cette corrélation est donnée par la relation suivante :

$$S = C \times V^{\frac{3}{2}} \times h^{-\frac{2}{3}} \qquad (1)$$

avec :

- ◦ S : score de planéité
- ◦ V : vitesse d'entrainement longitudinal du ruban de verre à la sortie du bain en m/min;
- ◦ h : épaisseur du ruban de verre à la sortie du bain exprimée en mètre ; et
- ◦ C : un coefficient égal à 0,98

Cette corrélation est robuste car les scores de planéité de différents verres sodocalciques de différentes épaisseurs provenant de différents bains de métaux et produits à différentes vitesses respectent cette corrélation avec des variations de moins de +/- 10%.

Par ailleurs, dans le domaine de la fabrication de verre flotté, il est connu de l'art antérieur d'appliquer des champs magnétiques au métal fondu du bain sur lequel le ruban de verre est déplacé.

C'est le cas par exemple de EP 304 844 A2 qui cherche une solution permettant de raccourcir le bain de métal fondu afin de limiter les pertes de chaleur alors que le raccourcissement du bain de métal a pour inconvénient d'engendrer de forts courants de convection naturelle dans le bain de métal, et que d'autre part le fait de placer une barrière dans le bain de métal pour séparer le bain en une région amont et une région avale conduit aussi à un gradient thermique axial très important et en conséquence à de forts courants de convection naturelle spiralaires au niveau de la barrière qui aboutissent à des distorsions dans le verre fabriqué sous forme de crêtes et de creux sous forme de stries, c'est-à-dire des défauts dioptriques.

A cette fin, il enseigne d'appliquer un champ magnétique généré par un courant continu ou un aimant permanent qui soit capable de supprimer localement le mouvement du bain de métal fondu - créant ainsi une barrière de métal fondu figé - de sorte que les transferts de chaleur aient lieu par conduction et rayonnement, et donc sans changement local de température, ce qui évite que les défauts dioptriques précitées ne se forment dans le ruban de verre.

En revanche, cette mesure dans EP 304 844 A2 ne vise pas à réduire ou supprimer les défauts d'ondulations dont il a été fait état plus haut. De plus, elle est appliquée spécifiquement dans le cas de bains de métaux raccourcis qui sont donc sensiblement plus courts que les bains classiques qui ont une longueur d'au moins 50 m, voire plus, la longueur de flottage étant généralement comprise entre 54 m et 64 m. Par ailleurs, EP 304 844 A2 ne traite pas non plus de la fabrication de verre fin, par exemple ayant une épaisseur inférieure ou égale à 1 mm, voire inférieure ou égal à 0,7 mm.

EP 304 844 A2 enseigne aussi d'appliquer, dans une zone amont où le verre a une viscosité encore très faible, un champ magnétique glissant en direction de l'aval du bain de métal fondu pour modifier l'épaisseur du bain de métal fondu de manière à être supérieure en aval par rapport à l'amont, et de ce fait contrôler l'épaisseur du ruban de verre fabriqué. EP 251 325 A2 divulgue aussi un tel enseignement. EP 304 844 A2 enseigne encore d'appliquer à l'extrémité aval du bain de métal fondu un champ magnétique glissant en direction de l'amont du bain pour solliciter le métal fondu vers l'amont et ce faisant empêcher le métal fondu de déborder à la sortie du bain qui est plus bas que la surface du bain. Ces enseignements relatifs à l'utilisation de champs magnétiques glissants ne visent donc pas à améliorer la qualité optique du verre.

US 2010/206009 A1 décrit aussi d'utiliser un moteur linéaire à la sortie du bain pour solliciter et déplacer le métal fondu vers l'amont par application au métal fondu d'un champ magnétique qui se déplace. FR 2 732 122 A1 mentionne l'utilisation de moteurs d'induction linéaire pour établir par voie électromagnétique des courants de métal.

En fait, aucun des documents précités ne traite, ni même ne mentionne le problème des ondulations du verre qui dégradent sa qualité optique.

Le but de la présente invention est d'améliorer le procédé de fabrication de verre plat par flottage sur un bain de métal fondu, notamment mais non seulement dans le cas du verre sodocalcique. Plus particulièrement, comparé à l'art antérieur caractérisé par la corrélation (1) définie plus haut, un but de l'invention est de permettre la fabrication par flottage d'un verre plat présentant une même qualité optique, en particulier vis-à-vis des défauts d'ondulation, autrement dit ayant un même score de planéité, mais en permettant de recourir à une vitesse d'entraînement supérieure du ruban de verre sur le bain de métal fondu. Ou encore formulé autrement, un but de l'invention est de permettre la fabrication par flottage de verre plat présentant une meilleure qualité optique, en particulier vis-à-vis des défauts d'ondulation, tout en entraînant le ruban de verre à une même vitesse sur le bain de métal fondu. Bien entendu, l'invention vise à atteindre ce but sans pour autant accroître les défauts dioptriques du verre obtenu.

A cette fin, la présente invention propose, selon un premier aspect, un procédé de fabrication de verre plat par flottage d'un ruban de verre sur un bain de métal fondu, dans lequel le ruban de verre est entraîné à vitesse constante suivant une direction de déplacement longitudinal depuis un côté amont du bain où le verre fondu est coulé en continu sur le métal fondu jusqu'à un côté aval du bain où le ruban de verre figé quitte le bain, le procédé comprenant :

-    soumettre à un champ magnétique statique tout ou partie du métal fondu situé sous le ruban de verre pour freiner le déplacement dudit métal fondu ou sensiblement le figer, et ce pour au moins une partie de la longueur d'une zone du bain pour laquelle le verre satisfait à la relation suivante :

$$10^{-3,5} \ \text{Pa.m}^3.\text{s} < \mu.h^3 < 10^{-2} \ \text{Pa.m}^3.\text{s} \qquad (2)$$

avec:

-    $\mu$: la viscosité du verre exprimée en Pa.s, et
-    $h$ : l'épaisseur du ruban de verre exprimée en mètre.

L'invention est basée sur le constat fait dans le cadre de l'invention que des turbulences existent dans le bain de métal fondu immédiatement sous le ruban de verre et que, dans la zone du bain de métal précitée, ces turbulences s'imprègnent à la surface du ruban de verre créant ainsi des défauts sous forme d'ondulations de la feuille de verre qui subsistent dans la feuille de verre obtenue. Bien que par définition les défauts d'ondulation n'entraînent pas de variations d'épaisseur de la feuille de verre, et donc pas de défaut optique en transmission à travers la feuille de verre, ils contribuent pour une part importante à dégrader la planéité des deux surfaces de la plaque de verre notamment pour les applications électronique comme le smartphone et la qualité optique des produits finaux comme les verres feuilletés automobiles où les défauts d'ondulation des deux plaques de verres vont s'ajouter pour dégrader la qualité optique en transmission du produit final. Sans vouloir être liée par une quelconque théorie, il semble que ces turbulences existant dans le métal fondu dans cette zone critique du bain soient liées à des variations de pression résultant de la convection forcée engendrée par le ruban de verre, ainsi qu'aux efforts de cisaillement auxquels est soumis le métal fondu sous le ruban de verre en raison de la traction exercée sur le ruban de verre pour l'entraîner sur le bain de métal fondu. Au contraire, en dehors de cette zone critique, ces turbulences dans le bain de métal fondu sont moins préjudiciables car, en amont de la zone critique, la viscosité du ruban de verre est trop faible (liée à la température du ruban de verre plus élevée) pour que les ondulations subsistent de manière sensible à la surface du verre tandis que, en aval de la zone critique, le ruban de verre a une viscosité plus élevée (liée à la température du ruban de verre qui a diminué) et y est suffisamment figé pour éviter que les turbulences existant dans le métal fondu ne puissent s'imprégner dans la surface du verre.

En pratique, la position de la zone critique est dépendante de plusieurs paramètres, notamment de la composition du verre, des conditions de formage du verre et de l'épaisseur du verre fabriqué. Il est possible de délimiter cette zone critique en recourant à la quantité $\mu.h^3$, avec $\mu$ la viscosité du verre et $h$ l'épaisseur du ruban. La quantité $\mu.h^3$ est directement liée au temps caractéristique de déformation du verre en réponse à une sollicitation mécanique. Elle permet de quantifier la susceptibilité du verre à se déformer sous l'effet d'une charge, à savoir en l'occurrence les sollicitations mécaniques du verre par le métal fondu en raison des variations locales de pression dans le bain de métal à l'interface verre/métal, aussi communément appelés forçage en pression. Dans le cadre de l'invention, il a été déterminé que la zone critique correspond à la portion de longueur du ruban de verre sur le bain de métal fondu où le verre satisfait à la relation (2) mentionnée plus haut.

Il a été estimé que les turbulences existant dans le bain de métal fondu dans cette zone critique contribuent pour environ 2/3 au score de planéité du verre final.

En conséquence, l'invention propose de réduire, voire de supprimer les turbulences dans le métal fondu à l'interface avec le ruban de verre en soumettant le métal fondu sous le ruban de verre dans cette zone critique, ou au moins pour une partie de celle-ci, à un champ magnétique statique. Le champ magnétique statique va induire des courants électriques dans le métal fondu lesquels sont soumis au champ magnétique statique, ce qui a pour effet de créer des forces de Lorentz s'exerçant de manière volumique sur le métal fondu. Ces forces de Lorentz vont s'opposer au déplacement du métal fondu que le ruban de verre tend à entraîner. Le fait de freiner le métal fondu sous le ruban de verre a pour effet de limiter les variations de pression dans le métal fondu, et donc de limiter les ondulations qui sont susceptibles de s'imprimer de leur fait à la surface du ruban de verre. Dans le cas où les forces de Lorentz sont suffisamment élevées pour figer le métal fondu sur sensiblement toute la profondeur du bain, seule une couche mince de métal fondu continue à s'écouler à l'interface avec le ruban de verre, et ce de manière laminaire. Il ne s'imprime donc plus d'ondulations dans la surface du ruban de verre liées à des turbulences ou variations de pression dans le métal fondu à l'interface avec le ruban de verre puisque celles-ci sont sensiblement inexistantes dans ce cas.

Suivant des modes de réalisation préférés, le procédé comprend une ou plusieurs des mesures suivantes :

- choisir ledit champ magnétique sensiblement perpendiculaire à la surface du ruban de verre, ce qui est particulièrement efficace pour créer un frein magnétique agissant sur le métal fondu, mais alternativement le champ magnétique peut être orienté différemment par exemple en direction latérale par rapport au bain de métal fondu ou dans la direction de la longueur du bain de métal fondu,
- soumettre le métal fondu audit champ magnétique sur toute la largeur du ruban du verre,
- soumettre le métal fondu audit champ magnétique sur toute la largeur du ruban du verre sans y soumettre le métal fondu dans une région contiguë au bord latéral du bain de chaque côté du ruban de verre,
- générer le champ magnétique de manière à être sensiblement homogène sur toute la largeur du ruban du verre,
- générer le champ magnétique de manière à être sensiblement homogène à l'intérieur de plages longitudinales au sein de la zone du bain de métal fondu soumise au champ magnétique,
- fixer l'intensité du champ magnétique à une valeur suffisante pour sensiblement figer le métal fondu du bain situé sous le ruban de verre sur sensiblement toute la profondeur du bain pour au moins une partie de la longueur de cette zone du bain de manière à y rendre laminaire l'écoulement de métal fondu à l'interface avec le ruban de verre,
- le verre est un verre sodocalcique et sélectionner l'intensité du champ magnétique et le cas échéant l'emplacement longitudinale et la longueur de la portion au sein de ladite zone du bain soumise au champ magnétique pour que le score de planéité en fonction de la vitesse d'entrainement longitudinal du ruban de verre sur le bain de métal fondu soit régi par la formule :

$$S \leq C \; x \; V^{\frac{3}{2}} \; x \; h^{-\frac{2}{3}}$$

avec :

  ◦ S : score de planéité
  ◦ V : vitesse de déplacement longitudinal du ruban de verre en m/min ;
  ◦ h : épaisseur du ruban de verre exprimée en mètre ; et
  ◦ C : un coefficient égal à 0,85, plus préférentiellement égal à 0,8, voire égal à 0,75, ou plus avantageusement égal à 0,7, voire égal à 0,65 , ou encore plus avantageusement égal à 0,55, voire 0,45 ou même 0,35,

- soumettre le métal fondu audit champ magnétique sur au moins 15%, plus préférentiellement sur au moins 25 %, encore plus préférentiellement sur au moins 33 %, plus préférentiellement encore sur au moins 50%, plus préférentiellement encore sur au moins 75% et plus avantageusement encore sur 100% de la longueur de ladite zone du bain mesurée dans la direction de déplacement longitudinal du ruban de verre,
- soumettre le métal fondu audit champ magnétique seulement pour une partie de la longueur de ladite zone du bain mesurée dans la direction de déplacement longitudinal du ruban de verre, ladite partie s'étendant à partir de l'extrémité de ladite zone où la température du verre est la plus élevée,
- soumettre au champ magnétique statique au moins une partie de ladite zone pour laquelle la viscosité est supérieure à $3,17 \times 10^5$ Pa.s et de préférence supérieure ou égale à $3,50 \times 10^5$ Pa.s, voire plus préférentiellement encore supérieure ou égale à $3,80 \times 10^5$ Pa.s, voire plus avantageusement supérieure ou égale à $5 \times 10^5$ Pa.s, voire plus avantageusement encore supérieure ou égale à $10^6$ Pa.s,
- soumettre audit champ magnétique (B) au moins 15%, plus préférentiellement au moins 25%, encore plus préférentiellement au moins 33 %, plus préférentiellement encore au moins 50%, plus préférentiellement encore au moins 75% et plus avantageusement encore 100% de la longueur de ladite partie de ladite zone (Z) mesurée dans la direction de déplacement longitudinal du ruban de verre,

- accélérer le refroidissement du ruban de verre dans la zone d'application du champ magnétique,
- sélectionner une longueur totale de flottage du verre sur le bain de métal fondu qui soit supérieure ou égale à 50 m, de préférence entre 54 m et 64 m.

Selon un deuxième aspect, l'invention propose d'utiliser un champ magnétique statique pour rendre laminaire l'écoulement de métal fondu à l'interface d'un ruban de verre fabriqué par flottage à vitesse constante sur un bain de métal fondu, et ce pour au moins une partie de la longueur d'une zone du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec:

- $\mu$: la viscosité du verre exprimée en Pa.s, et
- h : l'épaisseur du ruban de verre exprimée en mètre.

Selon un troisième aspect, l'invention propose d'utiliser un champ magnétique statique pour réduire les défauts d'ondulation dans un ruban de verre fabriqué par flottage à vitesse constante sur un bain de métal fondu.
Suivant un mode de réalisation préféré, le champ magnétique statique est appliqué sensiblement perpendiculairement à la surface du ruban de verre à tout ou partie du métal fondu situé sous le ruban de verre pour freiner le déplacement dudit métal fondu ou sensiblement le figer, et ce pour au moins une partie de la longueur d'une zone du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec:

- $\mu$: la viscosité du verre exprimée en Pa.s, et
- h : l'épaisseur du ruban de verre exprimée en mètre.

Dans ce deuxième et troisième aspect, on peut utiliser avantageusement ces mesures pour fixer la vitesse d'entraînement longitudinal du ruban de verre sur le bain de métal fondu en considération du score de planéité à obtenir pour le verre fabriqué selon la formule suivante :

$$S \leq C \, x \, V^{\frac{3}{2}} \, x \, h^{-\frac{2}{3}}$$

avec :

- ◦ S : score de planéité à obtenir ;
- ◦ V : vitesse de déplacement longitudinal du ruban de verre en m/min ;
- ◦ h : épaisseur du ruban de verre exprimée en mètre ; et
- ◦ C : un coefficient égal à 0,85, plus préférentiellement égal à 0,8, voire à 0,75, ou plus avantageusement égal à 0,7, voire à 0,65, ou encore plus avantageusement égal à 0,55, voire 0,45 ou même 0,35.

Selon un quatrième aspect, l'invention propose encore une installation conçue pour mettre en oeuvre le procédé selon n'importe lequel des trois aspects précédents et qui comprend :

- une cuve prévue pour recevoir un bain de métal fondu et dimensionnée pour permettre la fabrication de verre plat par flottage d'un ruban de verre suivant une direction de déplacement longitudinal depuis un côté amont du bain où le verre fondu est coulé en continu sur le métal fondu jusqu'à un côté aval du bain où le ruban de verre figé quitte le bain, la cuve ayant une longueur d'au moins 50 mètres et plus préférentiellement d'au moins 54 mètres ; et
- un dispositif pour générer un champ magnétique statique sensiblement vertical et placé au-dessus et/ou en-dessous de la cuve de manière à soumettre l'intérieur de la cuve audit champ magnétique statique pour une partie longitudinale de la cuve.

Suivant des modes de réalisation préférés, le procédé comprend une ou plusieurs des caractéristiques suivantes :

- le dispositif comprend des électroaimants et/ou des aimants permanents,
- le dispositif est prévu pour ne générer un champ magnétique que pour une portion de largeur de la cuve en laissant libre de champ magnétique une région contiguë à chacun des bords latéraux du bain,
- le dispositif est prévu pour que le champ magnétique généré soit sensiblement homogène sur toute la largeur d'application du champ magnétique à l'intérieur de la cuve,
- le dispositif est prévu pour que le champ magnétique généré soit sensiblement homogène à l'intérieur de plages longitudinales au sein de la partie longitudinale de la cuve soumise au champ magnétique,
- le dispositif est agencé pour être déplaçable par rapport à la cuve suivant la direction longitudinale de la cuve,
- l'installation comprend en outre :

  - ◦ des rouleaux extracteurs pour entraîner à une vitesse continu le ruban de verre sur le bain de métal contenu dans la cuve lesquels rouleaux extracteurs sont placés à l'extérieur de la cuve à une extrémité longitudinale de celle-ci, et/ou
◦ des rouleaux de bords moletés pour appliquer au ruban de verre sur le bain de métal des efforts transversaux à la direction de déplacement longitudinal lesquels rouleaux de bords sont positionnées des deux côté latéraux de la cuve.

De manière générale, l'invention est particulièrement adaptée à la fabrication de verre plat d'épaisseur inférieure ou égale à 3 mm car c'est pour celui-ci que les turbulences à la surface du métal fondu ont le plus tendance à imprimer définitivement des ondulations dans la surface du verre. Elle est encore plus adaptée à la fabrication de verre plat plus fin car plus le verre à fabriquer est fin, plus le problème des défauts d'ondulation devient important. Ainsi, l'invention est particulièrement avantageuse pour la fabrication de verre plat ayant une épaisseur inférieure ou égale à 2,1 mm, ou plus encore si son épaisseur est inférieure ou égale à 1,4 mm. Elle est encore plus avantageuse dans le cas d'une épaisseur inférieure à 1 mm, et encore plus dans le cas d'une épaisseur inférieure ou égale à 0,7 mm. Mais il est préférable que le verre plat fabriqué ait une épaisseur d'au moins 0,5 mm. Par ailleurs, l'invention est tout particulièrement adaptée à la fabrication industrielle de verre plat avec une vitesse de déplacement longitudinal du ruban de verre sur le bain de métal fondu qui est supérieure ou égale à 10 m/min. Mais il est préférable que la vitesse soit inférieure ou égale à 30 m/min. Plus généralement, elle peut aussi être mise en oeuvre dans le cadre de fabrication particulière où une vitesse de déplacement longitudinal du ruban de verre sur le bain de métal fondu plus faible est utilisée.

D'autres aspects, caractéristiques et avantages de l'invention apparaîtront à la lecture de la description qui suit d'un mode de réalisation préféré de l'invention, donnée à titre d'exemple et en référence au dessin annexé.

La figure 1 est une représentation schématique d'une installation de fabrication de verre plat par flottage qui est prévue pour mettre en oeuvre un procédé selon un mode de réalisation préféré de l'invention.

La figure 2 est une représentation schématique d'une vue en coupe suivant les flèches A-A à travers l'installation représentée à la figure 1.

Les figures 3 et 4 sont un agrandissement de la zone D identifiée sur la figure 2, à savoir une demi-vue de dessus et une vue en coupe verticale respectivement.

La figure 5 illustre une portion de longueur du ruban de verre obtenu par flottage et la façon d'y relever des profils unidimensionnels afin de déterminer le score de planéité du verre fabriqué.

La figure 6 illustre des courbes obtenues lors de la mise en oeuvre d'un procédé de détermination du score de planéité pour un exemple de verre.

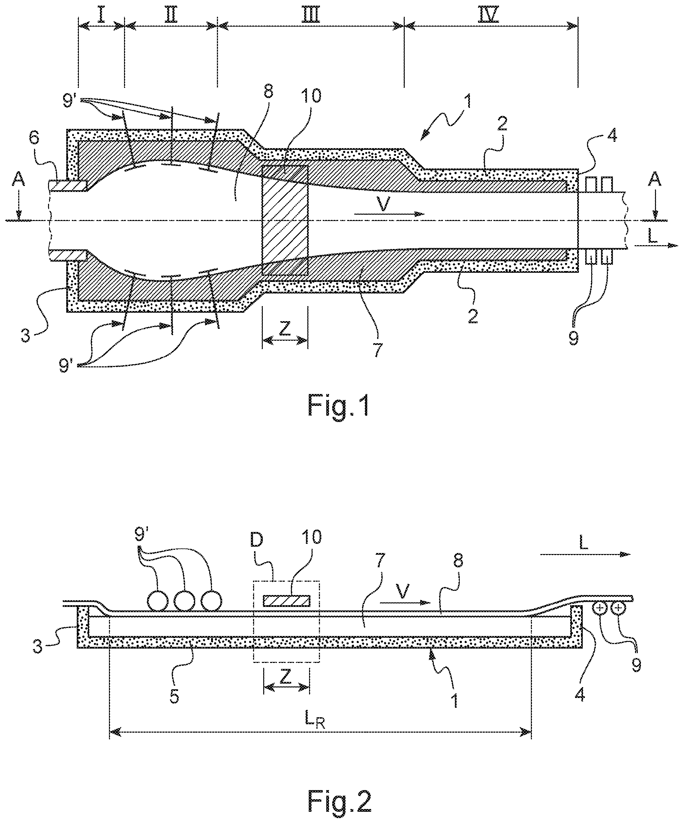

Comme cela est visible sur la figure 1, l'installation comprend une cuve 1 munie de parois latérales 2 et de parois d'extrémités 3 et 4 respectivement à l'entrée et à la sortie de la cuve 1. La cuve 1 contient un bain d'étain en fusion, ou de tout autre métal en fusion approprié, référencé 7. Le verre fondu est déversé sur le bain de métal en fusion 7 à son entrée, à partir d'un canal de distribution 6 se finissant par une lèvre de coulée et disposé au-dessus de la paroi d'entrée 3 de la cuve 1. Le ruban de verre 8 qui se forme sur le bain de métal en fusion 7 est entraîné en continu à vitesse constante suivant une direction de déplacement longitudinale L depuis l'entrée de la cuve - c'est-à-dire le côté amont du bain - jusqu'à sa sortie - c'est-à-dire le côté aval du bain - par des rouleaux extracteurs 9 placés à l'extérieur de la cuve 1 du côté aval.

Du point de vue du verre, le bain 7 définit plusieurs zones successives en suivant la direction de déplacement longitudinal L du ruban de verre 8. Après avoir été déversé sur le bain de métal fondu 7, le verre s'étale librement au maximum sur le bain dans une première zone I. Il se forme ainsi un ruban de verre 8 qui se déplace vers l'aval sous l'effet de la traction des rouleaux extracteurs 9.

Puis dans une deuxième zone II, le ruban de verre en formation subit des forces longitudinales et dirigées transversalement vers l'extérieur sous les actions combinées de rouleaux extracteurs 9 et de rouleaux de bords moletés 9'. Les rouleaux de bord moletés 9' sont généralement en acier et légèrement obliques par rapport à la direction de déplacement longitudinal L du ruban de verre 8. Ils sont entraînés par des moteurs - non représentés - généralement à des vitesses différentes selon leur position, et croissantes vers l'aval. Dans cette deuxième zone II, l'étirage du verre commence et celui-ci s'amincit. Dans une troisième zone III, le ruban de verre prend sa forme définitive sous l'action des rouleaux extracteurs 9 l'entraînant en direction de la sortie du bain.

Les deuxième et troisième zones II, III forment ensemble la zone d'étirage qui est suivie par une quatrième zone IV, dite de consolidation, où le ruban de verre figé se refroidit progressivement.

L'installation comprend un dispositif 10 produisant un champ magnétique statique B auquel est soumis le métal fondu dans la zone critique Z du bain de métal fondu 7 définie par la relation (2) mentionnée plus haut. La zone critique Z a habituellement une longueur de 4 à 6 mètres en l'absence de refroidissement forcée du ruban de verre 8 dans cette zone. Le dispositif 10 peut être mise en oeuvre avec des électroaimants et/ou avec des aimants permanents.

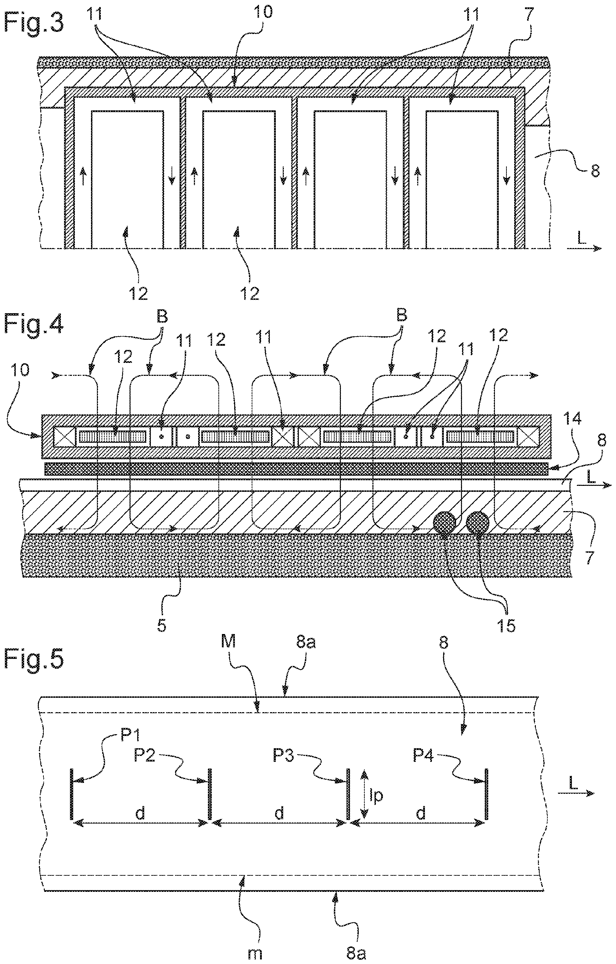

Les figures 3 et 4 illustrent un exemple de dispositif 10 mettant en oeuvre des électroaimants. En l'occurrence, le dispositif 10 est disposé au-dessus de la cuve 1, mais il pourrait l'être aussi en dessous de la cuve 1.

Le champ magnétique B est préférentiellement sensiblement vertical à travers le bain de métal fondu. En régime normal de production, le champ B est appliqué de préférence continuellement dans la zone critique Z du bain pendant que le ruban de verre 8 est entraîné en continu avec une vitesse de déplacement longitudinale constante sur le bain de métal fondu 7.

Dans une mise en oeuvre particulièrement avantageuse, l'intensité du champ B est choisie suffisamment élevée pour figer - grâce aux forces de Lorentz - le métal fondu sur sensiblement toute la profondeur du bain de métal fondu 7 de manière à ne laisser subsister qu'une couche mince de métal fondu 7 s'écoulant de manière laminaire à l'interface avec le ruban de verre 8. Ainsi, les turbulences dans le métal fondu 7 à l'interface avec le ruban de verre 8 sont sensiblement supprimées, et on évite donc l'impression d'ondulations à la surface du ruban de verre 8 que provoqueraient ces turbulences du métal fondu si elles n'étaient pas supprimées. A titre d'exemple, cet effet est obtenu avec un champ B d'environ 0,1 Tesla pour un bain d'étain 7 ayant une profondeur de 64 mm dans la zone critique Z et une vitesse moyenne de déplacement longitudinal du ruban de verre dans cette zone d'environ 14 m.m$^{-1}$. Cette valeur du champ B peut être extrapolée à d'autres profondeurs d'étain et d'autres vitesses de verre, ainsi que pour d'autres métaux en utilisant le paramètre d'interaction suivant :

$$N = \frac{\sigma B^2 h}{\rho V}$$

avec :

- B: le module du champ magnétique ;
- $\sigma$ : la conductivité du métal fondu ;
- $\rho$ : la densité du métal fondu ;
- V : la vitesse d'entraînement du ruban de verre 8 dans la direction de déplacement longitudinal L ;
- h : la profondeur du bain de métal fondu dans la zone d'application du champ B.

Le paramètre d'interaction N permet de rapporter les effets des forces de Lorentz sur le métal fondu 7 à ceux de l'inertie du métal fondu 7. Si idéalement le paramètre d'interaction N peut être choisi égal à 10 pour un champ magnétique statique, les simulations numériques ont montré qu'il est possible de le fixer de manière satisfaisante à une valeur inférieure. Néanmoins, il est préférable qu'il soit choisi supérieur ou égal à 0,5, plus préférentiellement supérieur ou égal à 1, encore plus préférentiellement supérieur ou égal à 2, et plus préférentiellement supérieur à 5.

Dans l'exemple illustré schématiquement aux figures 3 et 4, le dispositif 10 comprend une pluralité d'électroaimants agencés côté à côte dans la direction de déplacement longitudinal L, chacun comprenant une bobine 11 de fil de cuivre ou similaire. Comme illustré sur la figure 4, l'alimentation électrique des bobines 11 est réalisée de manière à alterner les pôles magnétiques dans la direction longitudinale du bain de métal fondu 8, ce qui permet de maîtriser la fermeture des lignes de champ magnétique à chaque fois entre deux bobines 11 consécutives. Dans chaque bobine 11 est placé un noyau respectif 12 à haute perméabilité magnétique -réaliser donc préférentiellement en un matériau ferromagnétique - pour canaliser les lignes de champ magnétique et d'homogénéiser le champ magnétique sous les noyaux 12 des bobines 11.

Il est préférable que le dispositif 10 soit refroidi, par exemple par eau, et qu'il soit isolé thermiquement afin de prévenir toute surchauffe, voire de le maintenir sous la température de Curie dans le cas d'aimants permanents.

Le métal fondu du bain 7 est préférentiellement soumis au champ B sur toute la largeur du ruban de verre 8 afin d'y être soumis aux forces volumiques de Lorentz sous toute la largeur du ruban de verre 8. A cette fin, les bobines 11 sont choisies avec une largeur suffisante (mesurée perpendiculairement à la direction de déplacement longitudinal L), à savoir dans les cas usuels entre 4 m et 5 m.

Il est préférable que le champ B soit sensiblement homogène dans la direction latérale - c'est-à-dire la direction perpendiculaire à la direction de déplacement longitudinal L -, autrement dit que le champ B ait la même intensité et la même orientation en tout point du métal fondu contenue dans une même section du bain de métal fondu 7 perpendiculaire à la direction de déplacement L. De la sorte, les forces volumiques de Lorentz exercées sur le métal fondu 7 sont sensiblement identiques en tout point d'une section transversale du bain de métal fondu 7. Par ailleurs, si pour des raisons de mise en oeuvre pratique comme c'est le cas dans l'exemple des figures 3 et 4, l'intensité du champ B n'est pas constante dans la direction de déplacement longitudinal L, outre l'inversion du champ B liée à la succession des bobines 11 dans cette direction, il est néanmoins avantageux de concevoir le dispositif 10 de manière à procurer des plages longitudinales - c'est-à-dire s'étendant suivant la direction L - au sein de la zone du bain 7 soumise au champ B dans lesquelles le champ B est sensiblement homogène. Ces mesures favorisent la laminarisation de l'écoulement de métal fondu 7 au niveau de l'ensemble de l'interface avec le ruban de verre 8.

Par ailleurs, il est préférable que le champ B ne soit pas appliqué en direction latérale sur toute la largeur du bain de métal fondu 7, mais qu'il s'arrête à un niveau latéral qui soit intermédiaire entre le ruban de verre 8 et les parois latérales 2 de la cuve 1. L'on favorise ainsi le rebouclage des lignes de courants électriques induits par le champ B dans le métal fondu 7 - qui sont perpendiculaires à la direction de déplacement longitudinal L sous le ruban de verre 8 - de manière horizontale dans la région latérale du bain de métal fondu 7 comprise entre le ruban de verre 8 et les parois 2 de la cuve 1. De ce fait, on limite le risque que les lignes de courant rebouclent verticalement avec des lignes de courant dans le fond du bain de métal fondu 7 au niveau de la sole 5 et donc aussi le risque corrélatif d'accélérer de manière préjudiciable du métal fondu 7 dans le fond du bain. Cette mesure permet aussi de limiter avantageusement la taille du dispositif 10 et de son circuit de refroidissement, ce qui permet de recourir à des bobines 11 plus petites et de diminuer la puissance consommée. Dans ce cas, le métal fondu 7 peut continuer - dans la zone critique Z - à s'écouler dans les régions latérales du bain de métal fondu 7 qui ne sont pas soumises au champ B. Une circulation de métal fondu 7 reste donc possible entre la partie du bain en amont de la zone critique Z et la partie en aval de la zone critique Z.

L'application du champ B au bain de métal fondu 7 pour tout ou partie de la longueur de la zone critique Z procure une amélioration de la qualité optique du verre obtenu pour une vitesse de déplacement longitudinale donnée du ruban de verre 8 ou, autrement dit, elle permet d'augmenter dans une certaine mesure la vitesse d'entrainement du ruban de verre 8 dans la direction longitudinale L sans détériorer la qualité optique du verre obtenu. Plus grande est la partie de la longueur de la zone critique Z pour laquelle le métal fondu 7 est soumis au champ B, plus le gain en termes de qualité optique du verre et/ou d'augmentation de la vitesse d'entraînement du ruban de verre 8 est important. Si le métal fondu est soumis seulement pour une partie de la longueur de la zone critique Z, il est préférable qu'elle soit placée du côté amont de la zone Z, c'est-à-dire là où la température du verre est la plus élevée car c'est là que s'impriment le plus d'ondulations dans la surface du ruban de verre 8. Cependant, l'on comprendra que le fait d'appliquer le champ B à la partie avale de la zone critique Z contribue aussi au gain en termes de qualité optique du verre et/ou d'augmentation de la vitesse d'entraînement du ruban de verre 8. En revanche, il n'est pas utile d'appliquer le champ B au métal fondu 7 en amont de la zone critique Z du fait que les défauts d'ondulation engendrés en amont de la zone critique Z ne s'impriment pas dans le ruban de verre 8.

Les calculs ont permis d'établir qu'en vue d'obtenir une même qualité optique d'un verre sodocalcique ayant une épaisseur de 2,1 mm, le fait de sensiblement figer le métal fondu sous le ruban de verre 8 au moyen du champ B sur toute la longueur de la zone critique Z - correspondant en l'occurrence à un intervalle de température de 150°C du verre -, la vitesse d'entrainement V du ruban de verre 8 dans la direction longitudinale L peut potentiellement être augmentée de 63% par rapport au cas où le métal fondu du bain 7 n'est pas soumis à un champ magnétique. Si on fige ainsi le métal fondu du bain 7 seulement pour la portion de longueur du ruban de verre 8 correspondant à l'intervalle des 100°C les plus critiques de la température du verre, la vitesse d'entrainement V du ruban de verre 8 dans la direction longitudinale L peut potentiellement être augmentée de 55% par rapport au cas où le métal fondu du bain 7 n'est pas soumis à un champ magnétique. Similairement, si l'on procède de même pour l'intervalle des 50°C les plus critiques de la température du verre, la vitesse d'entrainement V du ruban de verre 8 dans la direction longitudinale L peut potentiellement être augmentée de 35% par rapport au cas où le métal fondu du bain 7 n'est pas soumis à un champ magnétique.

Il peut être prévu d'appliquer un refroidissement forcé du ruban de verre 8 dans la zone d'application du champ B de manière à raccourcir la zone critique Z. Cela permettra avantageusement de réduire la longueur du dispositif 10. Cela peut être réalisé au moyen de refroidisseurs à eau 14 interposé entre le dispositif électromagnétique 10 et le ruban de verre 8 et/ou des conduites de refroidissement 15 disposées dans le bain de métal fondu 7.

Le dispositif 10 peut être avantageusement appliqué à une cuve 1 de type standard de l'art antérieur qui était dépourvu d'un tel dispositif. Pour ces cuves de l'art antérieur, la longueur totale de flottage du verre 8 sur le bain de métal fondu 7 - référencé $L_R$ sur la figure 2 - est généralement comprise entre 54 m et 64 m. Comme cela est visible sur la figure 2, cette longueur $L_R$ est mesurée entre l'endroit du bain de métal fondu 7 côté amont où le verre fondu est coulé sur lui et l'endroit côté aval où le ruban de verre figé 8 perd le contact avec le bain de métal fondu 7. Plus généralement, il est préférable de maintenir la longueur de flottage $L_R$ à au moins 50 m malgré l'adjonction du dispositif 10, ceci afin d'éviter d'engendrer des courants de convection dans le bain de métal fondu 7 en amont et en aval de la zone d'application du champ B qui soient préjudiciables à la qualité optique du verre produit. Cela est d'autant plus préférable si le métal fondu du bain 7 a la possibilité de se déplacer entre le côté amont et le côté aval de la zone du bain 7 soumise au champ magnétique B en raison des régions latérales à cette zone où le métal fondu n'est pas figé par le champ magnétique B.

Il peut aussi être prévu de compléter le dispositif 10 en disposant des aimants permanents et/ou des électroaimants sous la cuve 1 en complément à ceux placés au-dessus du bain de métal fondu 7 de manière que les lignes de champs magnétique ne se referment pas dans le bain de métal fondu 7.

Quel que soit la mise en oeuvre retenue du point de vue du dimensionnement et de l'agencement du dispositif 10 par rapport à la cuve 1, l'homme du métier tiendra compte le cas échéant de l'interaction du champ magnétique B et des lignes de courants induits dans le métal fondu 7 avec le matériau constitutif de la cuve 1 s'il devait ne pas être neutre.

Par ailleurs, il est avantageux que le dispositif 10 permette de régler l'intensité du champ B selon les besoins, par exemple au moyen d'un variateur de tension. Il est également avantageux que le dispositif 10 soit déplaçable par rapport à la cuve 1 suivant la direction de déplacement longitudinal L ou autrement dit suivant la direction longitudinale de la cuve 1. Par exemple, le dispositif 10 peut être soutenu par un portique déplaçable sur rails. Cette mesure permet de placer le dispositif 10 à l'endroit souhaité du bain 7 selon la nature et l'épaisseur du verre plat fabriqué.

Le fait de compléter l'installation de fabrication de verre plat par flottage d'un ruban de verre sur un bain de métal fondu avec un dispositif soumettant le métal fondu du bain à un champ magnétique statique B pour tout ou partie de la zone critique Z comme décrit plus haut permet d'augmenter la vitesse d'entraînement du ruban de verre sur le bain de métal fondu pour une qualité optique souhaitée. S'agissant du verre sodocalcique, le coefficient C de la formule (1) mentionnée en introduction peut être modifié sensiblement de manière favorable. Ainsi, il est possible d'obtenir que le coefficient C soit inférieur ou égal à 0,85 en choisissant suffisamment grandes l'intensité du champ magnétique B et la portion de longueur de la zone critique Z pour laquelle le métal fondu sous le ruban de verre 8 est soumis au champ B, eu égard aussi au positionnement de cette portion de longueur au sein de la zone critique Z. Par un choix approprié, il est possible de diminuer le coefficient C encore plus, pour être inférieur ou égal à 0,8, voire à 0,75, ou plus avantageusement encore à 0,7, voire à 0,65.

Le score de planéité S peut être contrôlé par des mesures directes de planéité sur le verre obtenu au moyen d'un profilomètre mécanique ou optique. Les profilomètres mécaniques ou optiques permettent de relever des profils unidimensionnels de planéité avec une précision d'échantillonnage (inférieur à 1 mm) et d'amplitude (inférieur à 0,1 micron) suffisante.

Pour mémoire, la puissance optique en réflexion $PO_r(x)$ sur un profil unidimensionnel est calculée en dérivant deux fois la courbe du profil unidimensionnel $p(x)$ (obtenue par lissage préalable sur un pas sensiblement inférieur à la longueur d'onde des défauts optiques à évaluer, autrement dit sur un pas préférentiellement inférieur à 1 mm en l'occurrence) :

$$PO_r(x) = 2\, p''(x) \qquad (3)$$

Le score de planéité S s'en déduit en calculant l'écart-type de la puissance optique en réflexion :

$$S = \sqrt{<PO_r^2(x)>} \qquad (4)$$

avec $<PO_r^2(x)>$ désignant la moyenne des carrés de la puissance optique en réflexion (étant rappelé que la moyenne arithmétique de la puissance optique en réflexion est nulle en l'occurrence).

En pratique, une procédure adéquate pour déterminer le score de planéité S du verre plat fabriqué avec une précision satisfaisante est comme suit :

- phase de relevé de profils unidimensionnels sur le verre obtenu au moyen d'un profilomètre mécanique ou optique, illustrée par la figure 5 représentant le ruban de verre 8 figé après extraction de la cuve 1, la référence 8a désignant ses bords latéraux :

  ○ relever le profil unidimensionnel avec le profilomètre pour au moins 20 profils unidimensionnels $P_n$ différents du verre plat obtenu - cf. $P_1$, $P_2$, $P_3$, $P_4$, etc. -, et ce pour chacune des faces principales du verre (autrement dit, celle qui lors de la fabrication était en contact avec le bain de métal fondu 7 et l'autre opposée qui était en contact avec l'atmosphère) ;
  ○ chacun des profils unidimensionnels $P_n$ étant défini suivant la direction perpendiculaire à la direction de déplacement longitudinal L du ruban de verre 8 car les profils unidimensionnels suivant cette direction suffisent à rendre compte des ondulations de la surface du verre qui dégradent sa qualité optique, étant précisé qu'il a été établi que la direction d'ondulation est perpendiculaire au déplacement longitudinal L du ruban de verre ;
  ○ chacun des profils unidimensionnels $P_n$ étant choisi avec une longueur $l_p$ de 80 cm, ce qui permet d'obtenir un relevé suffisamment significatif pour déterminer la qualité optique du verre ;
  ○ chacun des profils unidimensionnels $P_n$ étant choisi à une distance d'un mètre du précédent dans la direction de défilement longitudinal L du ruban de verre 8 sur le bain de métal fondu 7 ;
  ○ chacun des profils unidimensionnels $P_n$ étant choisi centralement au ruban de verre (considéré dans la direction perpendiculaire à la direction de défilement L du ruban de verre 8 sur le bain de métal fondu 7), ce qui évite de prendre en compte d'éventuelles distorsions pouvant exister vers les bords en raison des rouleaux de bords 9' : cf. les pontillés M symbolisant les marques laissées par les rouleaux de bords 9' ;

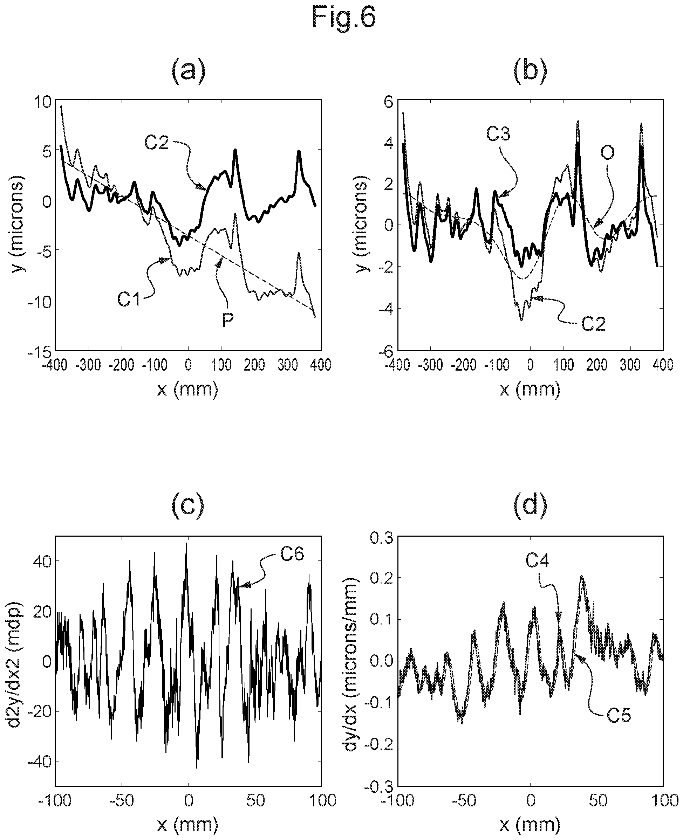

- phase de détermination du score de planéité S, illustrée par les figures 6(a) à(d) :

  ○ pour chaque courbe de profil unidimensionnel $P_n$ relevé, dont l'une donnée en exemple est illustrée sous la référence c1 :

    ▪ détermination de la pente principale, référencée p, de la courbe c1 par régression linéaire ;
    ▪ soustraction de la pente principale p de la courbe c1, ce qui permet de la redresser : cf. la courbe résultante c2 ;

- puis filtrage de la courbe ainsi redressée $c_2$ par un filtre gaussien robuste de fenêtre 50 mm - tel que décrit dans la norme ISO 16610-21 - pour séparer la rugosité de l'ondulation, référencée O, et ne conserver que la rugosité de la courbe $c_2$ par soustraction de l'ondulation O, ce qui fournit une courbe $c_3$, étant précisé qu'il a été établi qu'en pratique ce sont les ondulations de longueur d'onde inférieure ou égale à 50 mm qui sont critiques pour la qualité optique du verre ;
- puis première dérivation de la courbe de rugosité par différences finies, ce qui fournit une courbe $c_4$ ;
- puis filtrage de la courbe $c_4$ par une moyenne glissante de fenêtre 3 mm dont on ne garde que l'ondulation, ce qui fournit donc une courbe lissée $c_5$ ;
- puis deuxième dérivation de la courbe résultante $c_5$ fournissant ainsi la courbe $c_6$ correspondant à $0,5 \times PO_r(x)$ du profil considéré : cf. formule (3) plus haut ;
- puis détermination du double de l'écarttype de la courbe $c_6$ pour évaluer le score du planéité sur la base du profil unidimensionnel concerné : cf. formule (4) plus haut ;

○ Calcul du score de planéité S du verre plat défini comme étant égal à la moyenne des écarts-type déterminés pour l'ensemble des profils unidimensionnels $P_n$.

Il est possible aussi de déterminer le score de planéité indirectement en recourant à un procédé de mesure de la qualité optique du verre par ombroscopie décrite par exemple dans US 5,602,648.

Bien entendu, la présente invention n'est pas limitée aux exemples et au mode de réalisation décrits et représentés, mais elle est susceptible de nombreuses variantes accessibles à l'homme de l'art.

**Revendications**

1. Procédé de fabrication de verre plat par flottage d'un ruban de verre (8) sur un bain de métal fondu (7), préférentiellement de l'étain, dans lequel le ruban de verre (8) est entraîné à vitesse constante suivant une direction de déplacement longitudinal (L) depuis un côté amont (3) du bain où le verre fondu est coulé en continu sur le métal fondu (7) jusqu'à un côté aval (4) du bain où le ruban de verre figé quitte le bain, le procédé comprenant :

   - soumettre à un champ magnétique statique (B) qui est de préférence sensiblement perpendiculaire à la surface du ruban de verre (8), tout ou partie du métal fondu (7) situé sous le ruban de verre (8) pour freiner le déplacement dudit métal fondu (7) ou sensiblement le figer, et ce pour au moins une partie de la longueur d'une zone (Z) du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec :

   - $\mu$ : la viscosité du verre exprimée en Pa.s, et
   - h : l'épaisseur du ruban de verre à la sortie du bain exprimée en mètre.

2. Procédé selon la revendication 1, comprenant :

   - soumettre le métal fondu (7) audit champ magnétique (B) sur toute la largeur du ruban du verre (8).

3. Procédé selon la revendication 2, comprenant :

   - soumettre le métal fondu (7) audit champ magnétique (B) sur toute la largeur du ruban du verre (8) sans y soumettre le métal fondu (7) dans une région contiguë au bord latéral du bain de chaque côté du ruban de verre (8).

4. Procédé selon la revendication 2 ou 3, comprenant :

   - générer le champ magnétique (B) de manière à être sensiblement homogène sur toute la largeur du ruban du verre (8).

5. Procédé selon l'une quelconque des revendications 2 à 4, comprenant :

   - générer le champ magnétique (B) de manière à être sensiblement homogène à l'intérieur de plages longitudinales au sein de la zone du bain de métal fondu (7) soumise au champ magnétique (B).

6. Procédé selon l'une quelconque des revendications 1 à 5, comprenant :

   - fixer l'intensité du champ magnétique (B) à une valeur suffisante pour sensiblement figer le métal fondu du bain (7) situé sous le ruban de verre (8) sur sensiblement toute la profondeur du bain pour au moins une partie de la longueur de cette zone (Z) du bain de manière à y rendre laminaire l'écoulement de métal fondu à l'interface avec le ruban de verre (8).

7. Procédé selon l'une quelconque des revendications 1 à 6, dans lequel le verre est un verre sodocalcique, le procédé comprenant :

- sélectionner l'intensité du champ magnétique (B) et le cas échéant l'emplacement longitudinale et la longueur de la portion au sein de ladite zone (Z) du bain soumise au champ magnétique (B) pour que le score de planéité en fonction de la vitesse d'entrainement longitudinal du ruban de verre (8) sur le bain de métal fondu (7) soit régi par la formule :

$$S \leq C \, x \, V^{\frac{3}{2}} \, x \, h^{-\frac{2}{3}}$$

avec :

  ∘ S : score de planéité
  ∘ V : vitesse de déplacement longitudinal du ruban de verre en m/min ;
  ∘ h : épaisseur du ruban de verre exprimée en mètre ; et
  ∘ C : un coefficient égal à 0,85, plus préférentiellement égal à 0,8, voire à 0,75, ou plus avantageusement égal à 0,7, voire à 0,65, ou encore plus avantageusement égal à 0,55, voire à 0,45 ou même à 0,35.

8. Procédé selon l'une quelconque des revendications 1 à 7, comprenant :

   - soumettre le métal fondu (7) audit champ magnétique (B) sur au moins 15%, plus préférentiellement sur au moins 25 %, encore plus préférentiellement sur au moins 33 %, plus préférentiellement encore sur au moins 50%, plus préférentiellement encore sur au moins 75% et plus avantageusement encore sur 100% de la longueur de ladite zone (Z) du bain mesurée dans la direction de déplacement longitudinal (L) du ruban de verre (8).

9. Procédé selon l'une quelconque des revendications 1 à 8, comprenant :

   - soumettre le métal fondu (7) audit champ magnétique (B) seulement pour une partie de la longueur de ladite zone (Z) du bain mesurée dans la direction de déplacement longitudinal (L) du ruban de verre (8), ladite partie s'étendant à partir de l'extrémité de ladite zone (Z) où la température du verre est la plus élevée.

10. Procédé selon l'une quelconque des revendications 1 à 9, dans lequel on s'abstient de soumettre au champ magnétique statique (B) le métal fondu (7) de la partie du bain contigüe à ladite zone (Z) côté amont.

11. Procédé selon l'une quelconque des revendications 1 à 10, dans lequel l'épaisseur du ruban de verre à la sortie du bain est inférieure ou égale à 3 mm

12. Procédé selon la revendication 11, dans lequel l'épaisseur du ruban de verre à la sortie du bain est inférieure ou égale à 2,1 mm

13. Procédé selon la revendication 12, dans lequel l'épaisseur du ruban de verre à la sortie du bain est inférieure ou égale à 1,4 mm.

14. Procédé selon la revendication 13, dans lequel l'épaisseur du ruban de verre à la sortie du bain est inférieure à 1 mm.

15. Procédé selon la revendication 14, dans lequel l'épaisseur du ruban de verre à la sortie du bain est inférieure ou égale à 0,7 mm.

16. Procédé selon l'une quelconque des revendications 11 à 15, comprenant :

   - soumettre audit champ magnétique statique (B) au moins une partie de ladite zone (Z) pour laquelle la viscosité est supérieure à $3,17 \times 10^5$ Pa.s et de préférence supérieure ou égale à $3,50 \times 10^5$ Pa.s, voire plus préférentiellement encore supérieure ou égale à $3,80 \times 10^5$ Pa.s, voire plus avantageusement supérieure ou égale à $5 \times 10^5$ Pa.s, voire plus avantageusement encore supérieure ou égale à $10^6$ Pa.s.

17. Procédé selon la revendication 16, comprenant :

   - soumettre audit champ magnétique (B) au moins 15%, plus préférentiellement au moins 25%, encore plus préférentiellement au moins 33 %, plus préférentiellement encore au moins 50%, plus préférentiellement encore au moins 75% et plus avantageusement encore 100% de la longueur de ladite partie de ladite zone (Z) mesurée dans la direction de déplacement longitudinal du ruban de verre.

18. Procédé selon l'une quelconque des revendications 1 à 17, comprenant en outre :

   - accélérer le refroidissement du ruban de verre (8) dans la zone d'application du champ magnétique (B).

19. Procédé selon l'une quelconque des revendications 1 à 18, comprenant :

   - sélectionner une longueur totale de flottage ($L_R$) du verre (8) sur le bain de métal fondu (7) qui soit supérieure ou égale à 50 m.

**20.** Utilisation d'un champ magnétique statique (B) pour rendre laminaire l'écoulement de métal fondu à l'interface d'un ruban de verre (8) fabriqué par flottage à vitesse constante sur un bain de métal fondu (7), et ce pour au moins une partie de la longueur d'une zone (Z) du bain pour laquelle le verre satisfait à la relation suivante :

$$10^{-3,5} \text{ Pa.m}^3.\text{s} < \mu.h^3 < 10^{-2} \text{ Pa.m}^3.\text{s}$$

avec:

- $\mu$: la viscosité du verre exprimée en Pa.s, et
- h : l'épaisseur du ruban de verre à la sortie du bain exprimée en mètre.

**21.** Utilisation selon la revendication 20 pour en outre fixer la vitesse d'entrainement longitudinal (V) du ruban de verre (8) sur le bain de métal fondu (7) en considération du score de planéité à obtenir (S) pour le verre fabriqué selon la formule suivante :

$$S \leq C \ x \ V^{\frac{3}{2}} \ x \ h^{-\frac{2}{3}}$$

avec :

◦ S : score de planéité à obtenir ;
◦ V : vitesse de déplacement longitudinal du ruban de verre en m/min ;
◦ h : épaisseur du ruban de verre exprimée en mètre ; et
◦ C : un coefficient égal à 0,85, plus préférentiellement égal à 0,8, voire à 0,75, ou plus avantageusement égal à 0,7, voire à 0,65, ou encore plus avantageusement égal à 0,55, voire à 0,45 ou même à 0,35.

**22.** Installation conçue pour mettre en oeuvre le procédé selon l'une quelconque des revendications 1 à 19, comprenant :

- une cuve (1) prévue pour recevoir un bain de métal fondu (7) et dimensionnée pour permettre la fabrication de verre plat par flottage d'un ruban de verre suivant une direction de déplacement longitudinal (L) depuis un côté amont du bain (3) où le verre fondu est coulé en continu sur le métal fondu (7) jusqu'à un côté aval du bain (4) où le ruban de verre figé quitte le bain, la cuve ayant une longueur d'au moins 50 mètres et plus préférentiellement d'au moins 54 mètres ; et
- un dispositif (10) pour générer un champ magnétique statique (B) sensiblement vertical (8) et placé au-dessus et/ou en-dessous de la cuve (1) de manière à soumettre l'intérieur de la cuve (1) audit champ magnétique statique (B) pour une partie longitudinale de la cuve (1).

**23.** Installation selon la revendication 22, dans lequel le dispositif (10) comprend des électroaimants et/ou des aimants permanents.

**24.** Installation selon la revendication 22 ou 23, dans laquelle le dispositif (10) est prévu pour générer un champ magnétique (B) que pour une portion de largeur de la cuve (1) en laissant libre de champ magnétique une région contiguë à chacun des bords latéraux du bain.

**25.** Installation selon l'une quelconque des revendications 22 à 24, dans laquelle le dispositif (10) est prévu pour que le champ magnétique généré (B) soit sensiblement homogène sur toute la largeur d'application du champ magnétique à l'intérieur de la cuve.

**26.** Installation selon l'une quelconque des revendications 22 à 25, dans laquelle le dispositif (10) est prévu pour que le champ magnétique généré (B) soit sensiblement homogène à l'intérieur de plages longitudinales au sein de la partie longitudinale de la cuve (1) soumise au champ magnétique (B).

**27.** Installation selon l'une des revendications 22 à 26, dans laquelle le dispositif (10) est agencé pour être déplaçable par rapport à la cuve suivant la direction longitudinale de la cuve.

**28.** Installation selon l'une quelconque des revendications 22 à 27, comprenant en outre :

- des rouleaux extracteurs (9) pour entraîner à une vitesse continu le ruban de verre (8) sur le bain de métal contenu dans la cuve (1) lesquels rouleaux extracteurs sont placés à l'extérieur de la cuve (1) à une extrémité longitudinale de celle-ci, et/ou
- des rouleaux de bords moletés (9') pour appliquer au ruban de verre (8) sur le bain de métal des efforts transversaux à la direction de déplacement longitudinal lesquels rouleaux de bords sont positionnés des deux côtés latéraux de la cuve (1).

**Patentansprüche**

**1.** Verfahren zum Herstellen von Flachglas durch Floaten eines Glasbandes (8) auf einem Bad aus geschmolzenem Metall (7), vorzugsweise Zinn, wobei das Glasband (8) mit konstanter Geschwindigkeit entlang einer Längsbewegungsrichtung (L) von einer stromaufwärtigen Seite (3) des Bades, wo das geschmolzene Glas kontinuierlich auf das geschmolzene Metall (7) gegossen wird, bis zu einer stromabwärtigen Seite (4) des Bades angetrieben wird, wo das erstarrte Glasband das Bad verlässt, das Verfahren umfassend:

- Aussetzen gegenüber einem statischen Magnetfeld (B), das vorzugsweise im Wesentlichen senkrecht zu der Oberfläche des Glasbandes (8) ist, des gesamten oder eines Teils des geschmolzenen Metalls (7), das sich unter dem Glasband (8) befindet, zum Bremsen der Bewegung des geschmolzenen Metalls (7) oder im Wesentlichen zum Erstarrenlassen davon, und zwar für mindestens einen Teil der Länge einer Zone (Z) des Bades, für die das Glas die folgende Beziehung erfüllt:

$$10^{-3,5}\ Pa.m^3.s < \mu.h^3 < 10^{-2}\ Pa.m^3.s$$

worin:

- $\mu$: die Viskosität des Glases, ausgedrückt in Pa.s, und
- h: die Dicke des Glasbandes bei dem Austreten aus dem Bad, ausgedrückt in Metern.

2. Verfahren nach Anspruch 1, umfassend:

- Aussetzen des geschmolzenen Metalls (7) gegenüber dem Magnetfeld (B) über die gesamte Breite des Glasbandes (8).

3. Verfahren nach Anspruch 2, umfassend:

- Aussetzen des geschmolzenen Metalls (7) gegenüber dem Magnetfeld (B) über die gesamte Breite des Glasbandes (8), ohne ihm das geschmolzene Metall (7) in einer Region auszusetzen, die an den Seitenrand des Bades auf jeder Seite des Glasbandes (8) angrenzt.

4. Verfahren nach Anspruch 2 oder 3, umfassend:

- Erzeugen des Magnetfeldes (B) so, dass es über die gesamte Breite des Glasbandes (8) im Wesentlichen homogen ist.

5. Verfahren nach einem der Ansprüche 2 bis 4, umfassend:

- Erzeugen des Magnetfeldes (B) so, dass es im Inneren von Längsbereichen innerhalb der Zone des Bades aus geschmolzenem Metall (7), das dem Magnetfeld (B) ausgesetzt wird, im Wesentlichen homogen ist.

6. Verfahren nach einem der Ansprüche 1 bis 5, umfassend:

- Festlegen der Stärke des Magnetfeldes (B) auf einen Wert, der zum Erstarrenlassen des geschmolzenen Metalls des Bades (7), das sich unter dem Glasband (8) befindet, über im Wesentlichen die gesamte Tiefe des Bades für mindestens einen Teil der Länge dieser Zone (Z) des Bades ausreicht, sodass die Strömung des geschmolzenen Metalls an der Grenzfläche mit dem Glasband (8) laminarisiert wird.

7. Verfahren nach einem der Ansprüche 1 bis 6, wobei das Glas ein Natronkalkglas ist, das Verfahren umfassend:

- Auswählen der Stärke des Magnetfeldes (B) und gegebenenfalls der Längslage und der Länge des Abschnitts innerhalb der Zone (Z) des Bades, die dem Magnetfeld (B) ausgesetzt wird, sodass die Ebenheitsbewertung in Abhängigkeit von der Längsantriebsgeschwindigkeit des Glasbandes (8) auf dem Bad aus geschmolzenem Metall (7) durch die Formel geregelt wird:

$$S \leq C\ x\ V^{\frac{3}{2}}\ x\ h^{-\frac{2}{3}}$$

worin:

o S: Ebenheitsbewertung
◦ V: Längsbewegungsgeschwindigkeit des Glasbandes in m/min;
◦ h: Dicke des Glasbandes, ausgedrückt in Metern; und
o C: ein Koeffizient gleich 0,85, mehr bevorzugt gleich 0,8 oder sogar 0,75 oder vorteilhafter gleich 0,7 oder sogar 0,65 oder noch vorteilhafter gleich 0,55 oder sogar 0,45 oder gar 0,35.

8. Verfahren nach einem der Ansprüche 1 bis 7, umfassend:

- Aussetzen des geschmolzenen Metalls (7) gegenüber dem Magnetfeld (B) auf mindestens 15 %, mehr bevorzugt auf mindestens 25 %, noch mehr bevorzugt auf mindestens 33 %, mehr bevorzugt noch auf mindestens 50 %, mehr bevorzugt noch auf mindestens 75 % und vorteilhafter noch auf 100 % der Länge der Zone (Z) des Bades, gemessen in der Längsbewegungsrichtung (L) des Glasbandes (8).

9. Verfahren nach einem der Ansprüche 1 bis 8, umfassend:

- Aussetzen des geschmolzenen Metalls (7) gegenüber dem Magnetfeld (B) nur für einen Teil der Länge der Zone (Z) des Bades, gemessen in der Längsbewegungsrichtung (L) des Glasbandes (8), wobei sich dieser Teil von dem Ende der Zone (Z) aus erstreckt, an dem die Temperatur des Glases am höchsten ist.

10. Verfahren nach einem der Ansprüche 1 bis 9, wobei man davon absieht, das geschmolzene Metall (7) des Teils des Bades, der an die stromaufwärtige Zone (Z) angrenzt, dem statischen Magnetfeld (B) auszusetzen.

11. Verfahren nach einem der Ansprüche 1 bis 10, wobei die Dicke des Glasbandes an dem Austreten aus dem Bad kleiner als oder gleich 3 mm ist.

12. Verfahren nach Anspruch 11, wobei die Dicke des Glasbandes bei dem Austreten aus dem Bad kleiner als oder gleich 2,1 mm ist.

13. Verfahren nach Anspruch 12, wobei die Dicke des Glasbandes bei dem Austreten aus dem Bad kleiner als oder gleich 1,4 mm ist.

14. Verfahren nach Anspruch 13, wobei die Dicke des Glasbandes bei dem Austreten aus dem Bad kleiner als 1 mm ist.

15. Verfahren nach Anspruch 14, wobei die Dicke des Glasbandes bei dem Austreten aus dem Bad kleiner als oder gleich 0,7 mm ist.

16. Verfahren nach einem der Ansprüche 11 bis 15, umfassend:

- Aussetzen gegenüber dem statischen Magnetfeld (B) mindestens eines Teils der Zone (Z), für die die Viskosität größer als $3,17 \times 10^5$ Pa.s und vorzugsweise größer als oder gleich $3,50 \times 10^5$ Pa.s oder sogar mehr bevorzugt noch größer als oder gleich $3,80 \times 10^5$ Pa.s oder sogar vorteilhafter größer als oder gleich $5 \times 10^5$ Pa.s oder sogar noch vorteilhafter größer als oder gleich $10^6$ Pa.s ist.

17. Verfahren nach Anspruch 16, umfassend:

- Aussetzen gegenüber dem Magnetfeld (B) von mindestens 15 %, mehr bevorzugt mindestens 25 %, noch mehr bevorzugt mindestens 33 %, mehr bevorzugt noch mindestens 50 %, mehr bevorzugt noch mindestens 75 % und vorteilhafter noch 100 % der Länge des Teils der Zone (Z) des Bades, gemessen in der Längsbewegungsrichtung des Glasbandes.

18. Verfahren nach einem der Ansprüche 1 bis 17, umfassend ferner:

- Beschleunigen des Abkühlens des Glasbandes (8) in der Anwendungszone des Magnetfeldes (B).

19. Verfahren nach einem der Ansprüche 1 bis 18, umfassend:

- Auswählen einer Floatprozessgesamtlänge ($L_R$) des Glasbandes (8) auf dem Bad aus geschmolzenem Metall (7), die größer als oder gleich 50 m ist.

20. Verwendung eines statischen Magnetfeldes (B) zum Laminarisieren der Strömung von geschmolzenem Metall an der Grenzfläche eines Glasbandes (8), das durch Floaten mit konstanter Geschwindigkeit auf einem Bad aus geschmolzenem Metall (7) hergestellt wird, und zwar für mindestens einen Teil der Länge einer Zone (Z) des Bades, für die das Glas die folgende Beziehung erfüllt:

$$10^{-3,5} \text{ Pa.m}^3.\text{s} < \mu.h^3 < 10^{-2} \text{ Pa.m}^3.\text{s}$$

worin:

- $\mu$: die Viskosität des Glases, ausgedrückt in Pa.s, und
- h: die Dicke des Glasbandes bei dem Austreten aus dem Bad, ausgedrückt in Metern.

21. Verwendung nach Anspruch 20 zum ferner Festlegen der Längsantriebsgeschwindigkeit (V) des Glasbandes (8) auf dem Bad aus geschmolzenem Metall (7) unter Berücksichtigung der zu erzielenden Ebenheitsbewertung (S) für das hergestellte Glas gemäß der folgenden Formel:

$$S \leq C \, x \, V^{\frac{3}{2}} \, x \, h^{-\frac{2}{3}}$$

worin:

o S: Ebenheitsbewertung
o V: Längsbewegungsgeschwindigkeit des Glasbandes in m/min;
o h: Dicke des Glasbandes, ausgedrückt in Metern; und
o C: ein Koeffizient gleich 0,85, mehr bevorzugt gleich 0,8 oder sogar 0,75 oder vorteilhafter gleich 0,7 oder sogar 0,65 oder noch vorteilhafter gleich 0,55 oder sogar 0,45 oder gar 0,35.

22. Anlage, die zum Durchführen des Verfahrens nach einem der Ansprüche 1 bis 19 ausgelegt ist, umfassend:

- eine Wanne (1), die zum Aufnehmen eines Bades aus geschmolzenem Metall (7) vorgesehen und zum Ermöglichen der Herstellung von Flachglas durch Floaten eines Glasbandes entlang einer Längsbewegungsrichtung (L) von einer stromaufwärtigen Seite des Bades (3), wo das geschmolzene Glas kontinuierlich auf das geschmolzene Metall (7) gegossen wird, bis zu einer stromabwärtigen Seite des Bades (4) bemessen ist, wo das erstarrte Glasband das Bad verlässt, wobei die Wanne eine Länge von mindestens 50 Meter und mehr bevorzugt von mindestens 54 Meter besitzt; und

- eine Vorrichtung (10) zum Erzeugen eines im Wesentlichen vertikalen (8) statischen Magnetfelds (B) und die oberhalb und/oder unterhalb der Wanne (1) platziert ist, um das Innere der Wanne (1) dem statischen Magnetfeld (B) für einen Längsabschnitt der Wanne (1) auszusetzen.

23. Anlage nach Anspruch 22, wobei die Vorrichtung (10) Elektromagnete und/oder Permanentmagnete umfasst.

24. Anlage nach Anspruch 22 oder 23, wobei die Vorrichtung (10) zum Erzeugen eines Magnetfeldes (B) nur für einen Teil der Breite der Wanne (1) vorgesehen ist, indem eine Region, die an jeden der Seitenränder des Bades angrenzt, von dem Magnetfeld freigelassen wird.

25. Anlage nach einem der Ansprüche 22 bis 24, wobei die Vorrichtung (10) so vorgesehen ist, dass das erzeugte Magnetfeld (B) über die gesamte Breite der Magnetfeldanwendung im Inneren der Wanne im Wesentlichen homogen ist.

26. Anlage nach einem der Ansprüche 22 bis 25, wobei die Vorrichtung (10) so vorgesehen ist, dass das erzeugte Magnetfeld (B) im Inneren von Längsbereichen innerhalb des Längsteils der Wanne (1), die dem Magnetfeld (B) ausgesetzt wird, im Wesentlichen homogen ist.

27. Anlage nach einem der Ansprüche 22 bis 26, wobei die Vorrichtung (10) so angeordnet ist, dass sie relativ zu dem Behälter entlang der Längsrichtung des Behälters bewegbar ist.

28. Anlage nach einem der Ansprüche 22 bis 27, ferner umfassend:

- Abhebewalzen (9) zum Antreiben des Glasbandes (8) mit einer kontinuierlichen Geschwindigkeit auf dem Metallbad, das in der Wanne (1) enthalten ist, wobei die Abhebewalzen außerhalb der Wanne (1) an einem Längsende derselben platziert sind, und/oder

- geriefte Randwalzen (9') zum Anwenden auf das Glasband (8) auf dem Metallbad von Kräften quer zu der Längsbewegungsrichtung, wobei die Randwalzen an zwei seitlichen Seiten der Wanne (1) positioniert sind.

## Claims

1. A process for the manufacture of flat glass by floating a glass ribbon (8) on a bath of molten metal (7), preferably tin, in which the glass ribbon (8) is entrained at a constant rate along a direction of longitudinal movement (L) from an upstream side (3) of the bath, where the molten glass is poured continuously onto the molten metal (7), to a downstream side (4) of the bath, where the solidified glass ribbon leaves the bath, the process comprising:

- subjecting, to a static magnetic field (B) which is preferably substantially perpendicular to the surface of the glass ribbon (8), all or part of the molten metal (7) located under the glass ribbon (8) in order to slow down the movement of said molten metal (7) or substantially to set it, this being done for at least a part of the length of a zone (Z) of the bath for which the glass satisfies the following relationship:

$$10^{-3.5}\ Pa.m^3.s < \mu.h^3 < 10^{-2}\ Pa.m^3.s$$

with: -

- $\mu$: the viscosity of the glass, expressed in Pa.s, and
- h: the thickness of the glass ribbon at the outlet of the bath, expressed in meters.

2. The process as claimed in claim 1, comprising:

- subjecting the molten metal (7) to said magnetic field (B) over the entire width of the glass ribbon (8).

3. The process as claimed in claim 2, comprising:

- subjecting the molten metal (7) to said magnetic field (B) over the entire width of the glass ribbon (8) without subjecting thereto the molten metal (7) in a contiguous region at the lateral edge of the bath on each side of the glass ribbon (8).

4. The process as claimed in claim 2 or 3, comprising:

- generating the magnetic field (B) so as to be substantially homogeneous over the entire width of the glass ribbon (8).

5. The process as claimed in any one of claims 2 to 4, comprising:

   - generating the magnetic field (B) so as to be substantially homogeneous inside longitudinal ranges within the zone of the bath of molten metal (7) subjected to the magnetic field (B).

6. The process as claimed in any one of claims 1 to 5, comprising:

   - fixing the intensity of the magnetic field (B) at a value sufficient to substantially set the molten metal of the bath (7) located under the glass ribbon (8) over substantially the entire depth of the bath for at least a part of the length of this zone (Z) of the bath, so as to render laminar there the flow of molten metal at the interface with the glass ribbon (8).

7. The process as claimed in any one of claims 1 to 6, in which the glass is a soda-lime glass, the process comprising:

   - selecting the intensity of the magnetic field (B) and, if appropriate, the longitudinal location and the length of the portion within said zone (Z) of the bath subjected to the magnetic field (B) in order for the flatness score as a function of the rate of longitudinal entrainment of the glass ribbon (8) on the bath of molten metal (7) to be governed by the formula:

   $$S \leq C \, x \, V^{\frac{3}{2}} \, x \, h^{-\frac{2}{3}}$$

   with:

   o S: flatness score
   o V: rate of longitudinal movement of the glass ribbon in m/min;
   o h: thickness of the glass ribbon, expressed in meters; and
   o C: a coefficient equal to 0.85, more preferably equal to 0.8, indeed even to 0.75, or more advantageously equal to 0.7, indeed even to 0.65, or more advantageously still equal to 0.55, indeed even to 0.45 or even to 0.35.

8. The process as claimed in any one of claims 1 to 7, comprising:

   - subjecting the molten metal (7) to said magnetic field (B) over at least 15%, more preferably over at least 25%, more preferably still over at least 33%, more preferably still over at least 50%, more preferably still over at least 75% and more advantageously still over 100% of the length of said zone (Z) of the bath measured in the direction of longitudinal movement (L) of the glass ribbon (8).

9. The process as claimed in any one of claims 1 to 8, comprising:

   - subjecting the molten metal (7) to said magnetic field (B) only for a part of the length of said zone (Z) of the bath measured in the direction of longitudinal movement (L) of the glass ribbon (8), said part extending starting from the end of said zone (Z) where the temperature of the glass is highest.

10. The process as claimed in any one of claims 1 to 9, in which the molten metal (7) of the part of the bath contiguous with said zone (Z) on the upstream side is not subjected to the static magnetic field (B).

11. The process as claimed in any one of claims 1 to 10, in which the thickness of the glass ribbon at the outlet of the bath is less than or equal to 3 mm.

12. The process as claimed in claim 11, in which the thickness of the glass ribbon at the outlet of the bath is less than or equal to 2.1 mm.

13. The process as claimed in claim 12, in which the thickness of the glass ribbon at the outlet of the bath is less than or equal to 1.4 mm.

14. The process as claimed in claim 13, in which the thickness of the glass ribbon at the outlet of the bath is less than 1 mm.

15. The process as claimed in claim 14, in which the thickness of the glass ribbon at the outlet of the bath is less than or equal to 0.7 mm.

16. The process as claimed in any one of claims 11 to 15, comprising:

   - subjecting, to said static magnetic field (B), at least a part of said zone (Z) for which the viscosity is greater than $3.17 \times 10^5$ Pa.s and preferably greater than or equal to $3.50 \times 10^5$ Pa.s, indeed even more preferably still greater than or equal to $3.80 \times 10^5$ Pa.s, indeed even more advantageously greater than or equal to $5 \times 10^5$ Pa.s, indeed even more advantageously still greater than or equal to $10^6$ Pa.s.

17. The process as claimed in claim 16, comprising:

- subjecting, to said magnetic field (B), at least 15%, more preferably at least 25%, more preferably still at least 33%, more preferably still at least 50%, more preferably still at least 75% and more advantageously still 100% of the length of said part of said zone (Z) measured in the direction of longitudinal movement of the glass ribbon.

18. The process as claimed in any one of claims 1 to 17, additionally comprising:

- accelerating the cooling of the glass ribbon (8) in the zone of application of the magnetic field (B).

19. The process as claimed in any one of claims 1 to 18, comprising:

- selecting a total length of floating ($L_R$) of the glass (8) on the bath of molten metal (7) which is greater than or equal to 50 m.

20. The use of a static magnetic field (B) to render laminar the flow of molten metal at the interface of a glass ribbon (8) manufactured by floating at constant speed on a bath of molten metal (7), this being done for at least a part of the length of a zone (Z) of the bath for which the glass satisfies the following relationship:

$$10^{-3.5} \text{ Pa.m}^3\text{.s} < \mu.h^3 < 10^{-2} \text{ Pa.m}^3\text{.s}$$

with:

- $\mu$: the viscosity of the glass, expressed in Pa.s, and
- h: the thickness of the glass ribbon at the outlet of the bath, expressed in meters.

21. The use as claimed in claim 20, in order to additionally fix the rate of longitudinal entrainment (V) of the glass ribbon (8) on the bath of molten metal (7) by considering the flatness score to be obtained (S) for the glass manufactured according to the following formula:

$$S \leq C \, x \, V^{\frac{3}{2}} \, x \, h^{-\frac{2}{3}}$$

with:

o S: flatness score to be obtained;
o V: rate of longitudinal movement of the glass ribbon in m/min;
o h: thickness of the glass ribbon, expressed in meters; and

o C: a coefficient equal to 0.85, more preferably equal to 0.8, indeed even to 0.75, or more advantageously equal to 0.7, indeed even to 0.65, or more advantageously still equal to 0.55, indeed even to 0.45 or even to 0.35.

22. A plant designed to implement the process as claimed in any one of claims 1 to 19, comprising:

- a tank (1) arranged for receiving a bath of molten metal (7) and proportioned in order to make possible the manufacture of flat glass by floating a glass ribbon along a direction of longitudinal movement (L) from an upstream side of the bath (3), where the molten glass is continuously poured onto the molten metal (7), to a downstream side of the bath (4), where the solidified glass ribbon leaves the bath, the tank having a length of at least 50 meters and more preferably of at least 54 meters; and
- a device (10) for generating a static magnetic field (B) which is substantially vertical (8) and placed above and/or below the tank (1) so as to subject the interior of the tank (1) to said static magnetic field (B) for a longitudinal part of the tank (1).

23. The plant as claimed in claim 22, in which the device (10) comprises electromagnets and/or permanent magnets.

24. The plant as claimed in claim 22 or 23, in which the device (10) is arranged in order to generate a magnetic field (B) only for a portion of width of the tank (1), leaving free from magnetic field a contiguous region at each of the lateral edges of the bath.

25. The plant as claimed in any one of claims 22 to 24, in which the device (10) is arranged in order for the magnetic field generated (B) to be substantially homogeneous over the entire width of application of the magnetic field inside the tank.

26. The plant as claimed in any one of claims 22 to 25, in which the device (10) is arranged in order for the magnetic field generated (B) to be substantially homogeneous inside longitudinal ranges within the longitudinal part of the tank (1) subjected to the magnetic field (B).

27. The plant as claimed in one of claims 22 to 26, in which the device (10) is arranged in order to be movable with respect to the tank along the longitudinal direction of the tank.

28. The plant as claimed in any one of claims 22 to 27, additionally comprising:

- lift-out rollers (9) for entraining at a continuous rate the glass ribbon (8) on the metal bath present in the tank (1), which lift-out rollers are placed outside the tank (1) at a longitudinal end of the latter, and/or
- knurled edge rollers (9') for applying, to the glass ribbon (8) on the metal bath, loads transversal to the direction of longitudinal movement, which edge rollers are positioned on the two lateral sides of the tank (1).

Fig.1

Fig.2

Fig.3

Fig.4

Fig.5

# Fig.6

(a)

(b)

(c)

(d)

**EP 3 621 928 B1**

## RÉFÉRENCES CITÉES DANS LA DESCRIPTION

**Documents brevets cités dans la description**

- EP 304844 A2
- EP 251325 A2
- US 2010206009 A1
- FR 2732122 A1
- US 5602648 A